Europäisches Patentamt

European Patent Office

Office européen des brevets

(11) Veröffentlichungsnummer: **0 333 920 B1**

(12) **EUROPÄISCHE PATENTSCHRIFT**

(45) Veröffentlichungstag der Patentschrift: **06.05.92**

(21) Anmeldenummer: **88119521.8**

(22) Anmeldetag: **24.11.88**

(51) Int. Cl.⁵: **F16J 15/12**, F16J 15/08

(54) Weichstoffflachdichtung.

(30) Priorität: **23.03.88 DE 3809690**

(43) Veröffentlichungstag der Anmeldung:
**27.09.89 Patentblatt 89/39**

(45) Bekanntmachung des Hinweises auf die
Patenterteilung:
**06.05.92 Patentblatt 92/19**

(84) Benannte Vertragsstaaten:
**DE FR GB IT**

(56) Entgegenhaltungen:
**DE-B- 150 620**
**FR-A- 2 319 059**
**US-A- 3 192 690**
**US-A- 3 432 177**

**MTZ MOTORTECHNISCHE ZEITSCHRIFT,
Band 41, Nr. 3, März 1980, Seiten II-IX, Stuttgart, DE; J. KARNER: "Die nachziehfreie
Zylinderkopf-Verspannung"**

**PATENT ABSTRACTS OF JAPAN, Band 8, Nr.
16 (M-270)[1453], 24. Januar 1984; & JP-A-58
178 055 (KANESAKA GIJUTSU KENKYUSHO
K.K.) 18-10-1983**

(73) Patentinhaber: **GOETZE AG
Bürgermeister-Schmidt-Strasse 17
W-5093 Burscheid 1(DE)**

(72) Erfinder: **Majewski, Klaus-Peter, Dipl.-Ing.
Am Sportfeld 26
W-5093 Burscheid(DE)**

**Beschreibung**

Die Erfindung betrifft eine Weichstoffflachdichtung, wie insbesondere eine Zylinderkopfdichtung für Verbrennungskraftmaschinen, bestehend aus einem gegebenenfalls metallisch verstärkten und imprägnierten Faservlies, mit Durchgangsöffnungen für den Brennraum, das Schmiermittel, die Kühlflüssigkeit und die Befestigungsschrauben und einem metallischen Vorlagering in mindestens der Durchgangsöffnung für den Brennraum.

Bei Weichstoffzylinderkopfdichtungen für Verbrennungskraftmaschinen aus gegebenenfalls metallisch verstärkten und imprägnierten Faservliesen ist es bekannt, vor allem die Brennraumöffnungsränder mit im Querschnitt U-förmig über die Ränder gezogenen Einfassungen zu versehen. Die Einfassungen haben dann eine Schutzfunktion an den Öffnungsrändern, und sie bilden zugleich als Dichtungsring eine die Dichtpressung erhöhende Maßnahme im Bereich der Öffnung.

Zur weiteren Verbesserung der Schutzwirkung und der Dichtpressung ist es bekannt, den Öffnungsrändern Metallringe vorzulagern. Diese können mit der Einfassung zusammenwirken, indem sie entweder von der Einfassung umhüllt und von dieser am Dichtungsrand befestigt sind oder sie können der Einfassung vorgelagert und gegebenenfalls an dieser durch Schweißen, Kleben oder dergleichen befestigt sein. Ebenso können die Metallringe dem Öffnungsrand direkt ohne Verwendung einer Einfassung vorgelagert sein, so daß sie sowohl Schutz- als auch Abdichtungsfunktionen besitzen.

Nach beispielsweise der US-A-3.432.177 ist dem Brennraumöffnungsrand einer Weichstoffzylinderkopfdichtung ein Metallring vorgelagert, der als Sickenring ausgebildet ist. Der Ring wird dann beim Einbau unter Abflachung durch den Dichtpressungsdruck verformt und sorgt durch seine elastische Rückverformungskraft für eine besonders gute Gasabdichtung am Brennraumdurchgang.

Nachteilig bei der Verwendung derartiger metallischer Vorlageringe ist allerdings die hohe Dichtpressungskraft, die zur ausreichenden Verformung des Vorlageringes erforderlich ist. Die hohe Dichtpressungskraft auf den Vorlageringen entlastet die Weichstoffdichtungsplatte, so daß sie im Extremfall nur noch Trägerfunktionen besitzt. Vor allem macht sich diese nachteilige Dichtpressungsbelastung im Dichtungsbereich rund um die mit metallischen Vorlageringen versehenen Durchgangsöffnungen bemerkbar, so daß diese unmittelbar benachbart angeordneten Öffnungen für die Kühlflüssigkeiten nicht mehr ausreichend abgedichtet sind.

Der vorliegenden Erfindung liegt daher die Aufgabe zugrunde, eine Weichstoffflachdichtung gemäß Oberbegriff des Hauptpatentanspruches zu schaffen, deren metallische Vorlageringe in den Durchgangsöffnungen schon unter Anwendung geringer Dichtpressungsdrucke hervorragend abdichten, ohne daß im benachbarten Weichstoffbereich die Dichtpressung wesentlich herabgesetzt wird, so daß auch unmittelbar benachbart angeordnete Durchgangsöffnungen gut abdichten. Die Dichtung soll zugleich einfach und dadurch wirtschaftlich herstellbar sein.

Erfindungsgemäß wird diese Aufgabe durch eine Weichstoffflachdichtung mit einem metallischen Vorlagering in mindestens der Durchgangsöffnung für den Brennraum gelöst, welcher aus einem metallischen Trägerring und beidseitig aufliegenden Sickenringen aus Federstahl besteht, deren Sicken nach außen zu den Dichtflächen der abzudichtenden Maschinenteile weisen, deren Höhe so ausgewählt ist, daß nach Einsatz des Vorlageringes in die Dichtungsöffnung die Sicken in unbelastetem Zustand beidseitig die äußere Fläche der Weichstoffdichtung maximal etwa um eine Federstahlblechstärke des Sickenringes überragen, und deren Flexibilität so abgestimmt ist, daß im gepreßten Zustand die abzudichtenden Teile mit der Weichstoffdichtung dichtend in Kontakt kommen.

Beim Einbau der Dichtung werden jetzt durch den Dichtpressungsdruck die beiden aufliegenden Sickenringe in gleicher Weise verformt und sorgen durch ihre elastische Rückverformungskraft für die Abdichtung an den Öffnungsrändern. Da die Materialstärke des für die Sickenringe verwendeten Federstahlbleches wesentlich geringer als die Materialstärke der bisher eingesetzten einstückigen Sickenringe sein kann, ist jetzt die für die Verformung der Sickenringe notwendige Dichtpressungskraft geringer als bei den bisherigen Lösungen. Die Weichstoffdichtungsplatte selbst wird ausreichend auf Dichtpressung im Restflächenbereich belastet, und vor allem werden auch die direkt benachbart zu den mit Vorlageringen ausgerüsteten Durchgangsöffnungen angeordneten Durchgänge so weit auf Dichtpressung belastet, daß ihre Abdichtung gewährleistet ist. Bevorzugt wird der erfindungsgemäße Vorlagerung in Brennraumöffnungen von Zylinderkopfdichtungen verwendet, und die benachbart zu diesen Öffnungen angeordneten Durchgangsöffnungen sind Kühlmitteldurchgänge.

In bevorzugten Ausführungsformen ist die maximale Materialstärke des für die Sickenringe verwendeten Federstahlbleches etwa gleich einem Drittel der Weichstoffdichtungsplatte, sie liegt aber bevorzugt in einem Bereich von 0,1 bis 0,5 mm bei Weichstoffdichtungsplatten zwischen etwa 1 und 2 mm. Die Sickenhöhe der Sickenringe ist maximal etwa gleich der doppelten Federstahlblechstärke. Als Federstähle können handelsübliche Kohlenstoffstähle oder Edelstähle mit Zugfestigkeiten von etwa 1500 N/mm² verwendet werden, während die Trägerringe aus bevorzugt Normalstählen bestehen, allerdings können im Prinzip alle anderen Metalle oder Hartstoffe verwendet werden.

Im einfachsten Fall ist der Trägerring ein flacher Blechring, der aber auch zu einem S-Profil oder U-Profil verformt sein kann, so daß die Sickenringe dann auf den freien und planen Schenkelenden angeordnet sind. Im Normalfall ist die radiale Wandstärke der Sickenringe untereinander gleich und etwa auch gleich der radialen Wandstärke des Trägerringes.

Im Sinne der Erfindung kann jedoch je nach Konstruktion die radiale Wandstärke kleiner als die des Trägerringes sein. Die Außenflächen der Sickenringe können zur Verbesserung ihrer Mikro- und Makroabdichtung mit polymeren Überzügen aus bevorzugt einem Nitrilkautschuk oder einem Fluorkautschuk oder auch zum Beispiel temperaturbeständigem oder mit Gleitmitteln gefülltem Kunststoff versehen sein. Die Sickenringe können, falls erforderlich, mit dem Trägerring vor allem durch Schweißen oder Kleben verbunden sein, wobei die haftfreie Verbindung nach dem Einbau an und für sich funktionslos ist und nur dem Zusammenhalt des Vorlageringes bis zum Einbau dient. Der Vorlagering kann darüber hinaus mit dem Öffnungsrand der Weichstoffdichtung haft- oder kraftschlüssig verbunden sein, wozu bevorzugt ein zusätzlicher, im Querschnitt U-förmiger Einfassungsring verwendet wird, der den Trägerring umhüllt und mit seinen Schenkelenden zur Befestigung auf der Weichstoffdichtungsplatte aufliegt. In diesem Fall sind die Schenkel entsprechend den Sickenringen des Vorlageringes zur Anpassung gesickt.

Durch die Erfindung ist somit eine Weichstoffdichtung, wie insbesondere eine Zylinderkopfdichtung, mit einem metallischen Vorlagering in den besonders beabstandeten Durchgangsöffnungen geschaffen, der gut verformbar ist und eine verbesserte Abdichtwirkung besitzt, ohne daß die Dichtpressung im Restflächenbereich wesentlich vom Dichtpressungsdruck entlastet würde, so daß vor allem auch eng zu den mit Vorlageringen angeordneten Durchgangsöffnungen angeordnete Durchgänge ohne besondere weitere Maßnahmen gut abdichten. Da darüber hinaus der Vorlagering aus gegebenenfalls verformten Blechringen besteht, ist die Dichtung einfach und dadurch wirtschaftlich herstellbar.

Die Erfindung ist durch die Abbildungen näher erläutert, und zwar zeigen:

Figur 1 das Aufsichtsbild auf eine Zylinderkopfdichtung im Brennraumöffnungsbereich

Figur 2 das Querschnittsbild in der Linie 2-2' der Zylinderkopfdichtung im Brennraumöffnungsbereich aus Figur 1 vor dem Einbau

Figur 3 die eingebaute Zylinderkopfdichtung der Figur 2 im Querschnitt

Figuren 4 bis 9 Querschnittsbilder mehrerer Zylinderkopfdichtungen gemäß der Erfindung im Brennraumöffnungsbereich vor dem Einbau.

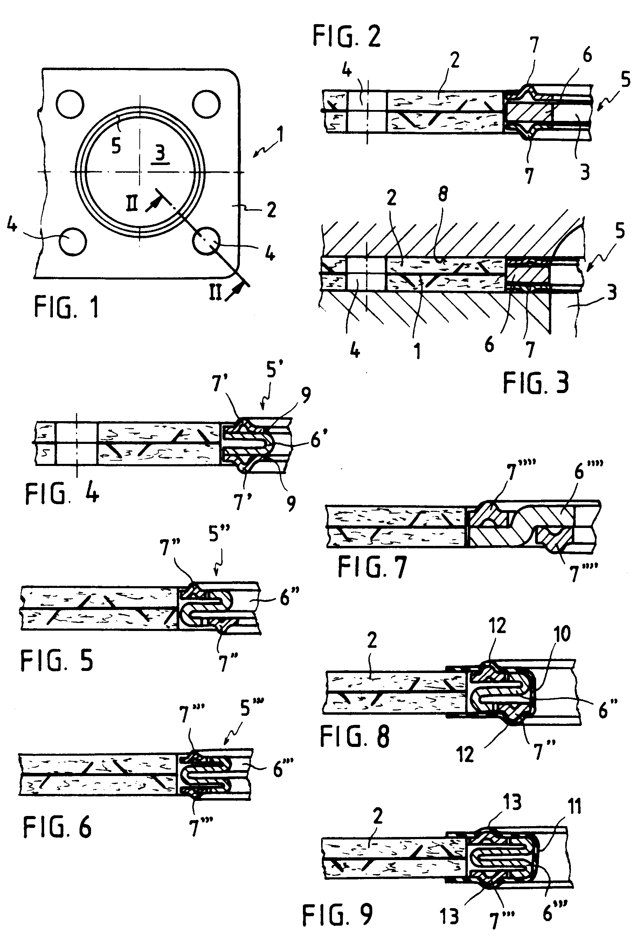

Im Aufsichtsbild der Figur 1 ist (1) die Zylinderkopfdichtung mit der Weichstoffplatte (2), der Brennraumöffnung (3) und den beiden Kühlmittelöffnungen (4) am Brennraumrand, In die Brennraumöffnung (2) ist der Vorlagering (5) eingesetzt.

Figur 2 zeigt die Zylinderkopfdichtung (1) der Figur 1 im Querschnitt in der Schnittlinie II-II'. In die Brennraumöffnung (3) ist der Vorlagering (5) eingesetzt, der aus dem Trägerring (6) und den beiden aufliegenden Sickenringen (7) besteht. Benachbart zur Brennraumöffnung (3) ist die Kühlflüssigkeitsöffnung (4) angeordnet.

In Figur 3 ist die Dichtung (1) der Figur 2 zwischen die Dichtflächen (8) des Zylinderkopfes und des Motorblockes eingebaut, die Sickenringe (7) des Vorlageringes (5) sind unter dem Dichtpressungsdruck abgeflacht und dichten aufgrund ihrer elastischen Rückverformungskraft am Brennraumrand (3) ab. Gleichzeitig ist die Restfläche (2) vom Dichtpressungsdruck gleichmäßig belastet, so daß auch der Kühlmitteldurchgang (4) ohne besondere weitere Maßnahme abgedichtet ist.

Im Querschnittsbild der Figur 4 besteht der Trägerring (6') des Vorlageringes (5') aus einem U-förmig gebogenen Blech. In diesem Fall sind die auf dem Trägerring (6') aufliegenden Sickenringe (7') am Innenumfang mit dem Trägerring (6') an den Punkten (9) durch Schweißen verbunden.

Im Querschnittsbild der Figur 5 besteht der Vorlagering (5'') aus einem mit S-förmigem Profil gebogenen Trägerring (6''), so daß die auf dem Trägerring (6'') aufliegenden Sickenringe (7'') die halbe radiale Wandstärke des Trägerringes (6'') besitzen und zueinander versetzt auf dem Trägerring (6'') aufliegen.

In Figur 6 ist der Trägerring (6''') dreifach so umgebogen, daß die Sickenringe (7''') etwa die halbe radiale Wandstärke des Trägerringes (6''') besitzen und in den Raum zwischen Weichstoffdichtungsplatte und den beiden Trägerringenden eingesetzt sind.

In Figur 7 ist der Trägerring (6''') abgestuft, so daß die beiden Sickenringe (7''') auf den beiden parallelen Stirnflächen angeordnet sind.

Die Figuren 8 und 9 stellen im Querschnitt die Vorlageringe ((6'' und 6''') der Figuren 5 und 6 dar, die von im Querschnitt U-förmigen Einfassungen (10,11) umhüllt sind. Die Einfassungen (10,11) liegen zur Befestigung der Trägerringe (6'',6''') auf der Weichstoffplatte (2) auf, und ihre Schenkel sind zur Anpassung an die Kontur der vorstehenden Sickenringe (7'',7''') unter Bildung der Sicken (12,13) verformt.

**Patentansprüche**

1. Weichstoffflachdichtung (1), insbesondere Zylinderkopfdichtung (1) für Verbrennungskraftmaschinen, bestehend aus einem gegebenenfalls metallisch verstärkten und imprägnierten Faservlies (2) mit Durchgangsöffnungen (3,4) für den Brennraum, das Schmiermittel, das Kühlmittel und die Befestigungsschrauben und einem metallischen Vorlagering (5) in mindestens der Durchgangsöffnung (3) für den Brennraum, dadurch gekennzeichnet, daß der Vorlagering (5) aus einem metallischen Trägerring (6) und beidseitig aufliegenden Sickenringen (7) aus Federstahl besteht, deren Sicken nach außen zu den Dichtflächen (8) der abzudichtenden Maschinenteile weisen, deren Höhe so ausgewählt ist, daß nach Einsatz des Vorlageringes (5) in die Dichtungsöffnung (3) die Sicken in unbelastetem Zustand beidseitig die äußere Fläche der Weichstoffdichtung maximal um etwa eine Federstahlblechstärke des Sikkenringes (7) überragen, und deren Flexibilität so abgestimmt ist, daß im gepreßten Zustand die abzudichtenden Teile (8) mit der Weichstoffdichtung (1) dichtend in Kontakt kommen.

2. Weichstoffflachdichtung nach Anspruch 1, dadurch gekennzeichnet, daß die Dicke des für die Sickenringe (7) verwendeten Federstahlbleches maximal gleich etwa ein Drittel so groß ist wie die Dicke der Weichstoffplatte (2).

3. Weichstoffflachdichtung nach den Ansprüchen 1 und 2, dadurch gekennzeichnet, daß die Dikke des für die Sickenringe (7) verwendeten Federstahlbleches zwischen 0,2 und 0,5 mm liegt.

4. Weichstoffflachdichtung nach den Ansprüchen 1 bis 3, dadurch gekennzeichnet, daß die Höhe der Sicke maximal doppelt so groß ist wie die Federstahlblechstärke.

5. Weichstoffflachdichtung nach den Ansprüchen 1 bis 4, dadurch gekennzeichnet, daß die Sickenringe (7) mit dem Trägerring (5) durch Schweißen oder Kleben (9) verbunden sind.

6. Weichstoffflachdichtung nach den Ansprüchen 1 bis 5, dadurch gekennzeichnet, daß die Außenflächen der Sickenringe (7) mit polymeren Überzügen aus Fluorkatuschuk, Nitrilkautschuk, Silikonkautschuk oder temperaturbeständigen, gegebenenfalls mit Gleitmitteln gefüllten Kunststoffen versehen sind.

7. Weichstoffflachdichtung nach den Ansprüchen 1 bis 6, dadurch gekennzeichnet, daß der Trägerring (6) aus einem ein- oder mehrfach gebogenen Blechring besteht.

8. Weichstoffflachdichtung nach den Ansprüchen 1 bis 7, dadurch gekennzeichnet, daß der Vorlagering (6) mit der Weichstoffdichtungsplatte (2) haft- oder kraftschlüssig verbunden ist.

9. Weichstoffflachdichtung nach den Ansprüchen 1 bis 8, dadurch gekennzeichnet, daß der Vorlagering (6) von einer im Querschnitt U-förmigen Einfassung (10,11) umhüllt ist, deren Schenkelenden zur Befestigung an der Weichstoffdichtungsplatte (2) aufliegen, und deren Schenkel entsprechend den vorstehenden Sikken der Sickenringe (7) unter Bildung von die Sickenringe (7) aufnehmenden Sicken (12,13) verformt sind.

10. Verwendung der Weichstoffflachdichtung nach mindestens einem der Ansprüche 1 bis 9 als Zylinderkopfdichtung für Verbrennungskraftmaschinen mit in den Brennraumöffnungen (3) eingesetzten Vorlageringen (9) und benachbart zu den Brennraumöffnungen (3) angeordneten Kühlwasserdurchgängen (4).

**Claims**

1. Soft flat gasket (1), especially a cylinder head gasket (1) for internal combustion engines, consisting of a fibre fleece (2), if desired reinforced with metal and impregnated with, through apertures (3, 4) for the combustion chamber, the lubricant, the coolant and the fixing screws, and a metal lining ring (5) in at least the through aperture for the combustion chamber, characterized in that the lining ring (5) consists of a metallic support ring (6) and beaded rings (7) of spring steel lying on the two sides thereof, the beads of which face outwardly to the sealing faces (8) of the machine parts to be sealed, with heights so selected that, after fitting the lining ring (5) in the gasket aperture (3) the beads project in the unloaded state on both sides beyond the enter surfaces of the soft flat gasket by a most around one thickness of the spring sheet steel of the beaded rings (7), and with a flexibility so determined that, in the compressed state the parts (8) to be sealed come into sealing contact with the soft gasket (1).

**2.** Soft flat gasket according to claim 1, characterized in that the thickness of the spring sheet steel used for the beaded rings (7) is at most equal to about a third of the thickness of the soft material plate (2).

**3.** Soft flat gasket according to claims 1 and 2, characterized in that the thickness of the spring steel used for the beaded rings (7) lies between 0,2 and 0,5 mm.

**4.** Soft flat gasket according to claims 1 to 3, characterized in that the height of the bead is at most twice as large as the spring steel sheet thickness.

**5.** Soft flat gasket according to claims 1 to 4, characterized in that the beaded rings (7) are joined to the support ring (6) by welding or an adhesive (9).

**6.** Soft flat gasket according to claims 1 to 5, characterized in that the outer surfaces of the beaded rings (7) are provided with polymer coatings of fluoro-rubber, nitrile rubber, silicone rubber or temperature-resistant plastics, filled if desired with lubricant.

**7.** Soft flat gasket according to claims 1 to 6, characterized in that the support ring (6) consists of a sheet metal ring bent once or more than once.

**8.** Soft flat gasket according to claims 1 to 7, characterized in that the lining ring (5) is attached to the flat gasket plate (2) adhesively or by a force fit.

**9.** Soft flat gasket according to claims 1 to 8, characterized in that the lining ring (5) is sheathed in a U-shaped binding (10, 11), the ends of whose arms bear on the soft flat gasket plate (2) for the attachment and whose arms are deformed in accordance with the projecting beads of the beaded rings (7), with the formation of beads (12, 13) receiving the beaded rings (7).

**10.** Use of the soft flat gasket according to at least one of claims 1 to 9 as a cylinder head seal for internal combustion engines with lining rings (5) fitted in the combustion chamber apertures (3), and cooling water passages (4) arranged next to the combustion chamber apertures (3).

**Revendications**

**1.** Joint plat en matériau mou (1), en particulier joint de culasse (1) pour moteurs à combustion interne, consistant en: un voile de fibres (2) imprégné et renforcé, éventuellement métallique, avec des ouvertures de passage (3,4) pour la chambre de combustion, le lubrifiant, l'agent refroidisseur et les vis de fixation, et une couronne de calage (5) métallique dans au moins l'ouverture de passage (3) de la chambre de combustion, caractérisé en ce que la couronne de calage (5) se compose d'une couronne support (6) métallique et de couronnes moulurées (7) en acier élastique, disposées de chaque côté, les moulures des couronnes moulurées s'étendant vers l'extérieur jusqu'aux surfaces d'étanchéité des pièces du moteur entre lesquelles doit être monté le joint, la hauteur des moulures étant calculée pour qu'après montage de la couronne de calabge (5) dans l'ouverture d'étanchéité (3), les moulures dépassant de chaque côté des surfaces extérieures du joint mou, au maximum d'environ une épaisseur de tôle d'acier élastique de la couronne moulurée (7) lorsque les moulures ne sont pas comprimées, l'élasticité des couronnes moulurées étant reglée de facon que, lorsqu'elles sont comprimées, les pièces (8) entre lesquelles doit être monté le joint, viennent en contact étanche avec le joint en matériau mou (1).

**2.** Joint plat en matériau mou selon la revendication 1, caractérisé en ce que l'épaisseur de la tôle d'acier élastique employée pour les couronnes moulurées (7) est au maximum égale au tiers de l'épaisseur de la plaque de matériau mou (2).

**3.** Joint plat en matériau mou selon les revendications 1 et 2, caractérisé en ce que l'épaisseur de la tôle d'acier élastique employée pour les couronnes moulurées (7) est comprise entre 0,2 et 0,5 mm.

**4.** Joint plat en matériau mou selon les revendications 1 à 3, caractérisé en ce que la hauteur de la moulure est au maximum égale à deux fois l'épaisseur de la tôle d'acier élastique.

**5.** Joint plat en matériau mou slon les revendications 1 à 4, caractérisé en ce que les couronnes moulurées (7) sont liées à la couronne support (5) par soudure ou collage (9).

6. Joint plat en matériau mou selon les revendications 1 à 5, caractérisé en ce que les surfaces extérieures des couronnes moulurées (7) sont dotées de revêtements polymères de caoutchouc au fluor, de caoutchouc nitrile, de caoutchouc silicone, ou de matières plastiques résistantes à la température, éventuellement chargées en lubrifiant.

7. Joint plat en matériau mou selon les revendications 1 à 6, caractérisé en ce que la couronne (6) consiste en une couronne de tôle pliée une ou plusieurs fois.

8. Joint plat en matériau mou selon les revendications 1 à 7, caractérisée en ce que la couronne de calage (5) est liée à la plaque d'étanchéité en matériau mou pour adhérence ou par une force.

9. Joint plat en matériau mou selon les revendications 1 à 8, caractérisé en ce que la couronne de calage (5) est enveloppée par un entourage (10,11) à section en U dont les extrémités des branches sont appliquées contre la plaque d'étanchéité de matériau mou (2) pour leur fixation, et dont les branches sont déformées en correspondance avec les moulures saillantes des couronnes moulurées (7) par la formation de moulures (12,13) recevant les couronnes moulurées (7).

10. Utilisation du joint plat en matériau mou selon au moins l'une des revendications 1 à 9, comme joint de culasse pour moteur à combustion interne avec des couronnes de calage (9) montées dans les ouvertures (3) de chambres de combustion et dans les passages (4) d'eau de refroidissement disposées près des ouvertures (3) de chambres de combustion.

FIG. 2

FIG. 3

FIG. 4

FIG. 5

FIG. 6

FIG. 1

FIG. 7

FIG. 8

FIG. 9